(19) Europäisches Patentamt / European Patent Office / Office européen des brevets

(11) **EP 3 135 617 A1**

(12) **EUROPEAN PATENT APPLICATION**

(43) Date of publication:
01.03.2017 Bulletin 2017/09

(21) Application number: 15182710.2

(22) Date of filing: 27.08.2015

(51) Int Cl.:
*B65H 43/02* (2006.01)    *B65H 7/02* (2006.01)
*A47K 10/24* (2006.01)    *G01H 1/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(71) Applicant: **Posterfy Oy
02600 Espoo (FI)**

(72) Inventors:
• **Mattila, Tomi
  02140 Espoo (FI)**
• **Ahokas, Jani
  00870 Helsinki (FI)**
• **Korhonen, Vesa
  00140 Helsinki (FI)**

(74) Representative: **Suominen, Kaisa Liisa
Moosedog Oy
Rykmentintie 2B
20810 Turku (FI)**

(54)    **METHOD FOR MONITORING DISPENSERS**

(57)    A method for monitoring a dispenser is provided. The dispenser is equipped with a processor, a communication interface and at least one sensor capable of sensing mechanical vibrations of the dispenser. Mechanical vibrations of the dispenser are monitored continuously by the at least one sensor. A first analysis of the mechanical vibrations is initiated by the processor, when a measure of the mechanical vibrations exceeds a pre-set threshold value, to obtain first analytical data. The analysis of the mechanical vibrations is terminated after a pre-set time period. The first analytical data is compared to stored reference data to determine a first cause of the mechanical vibrations. Information on the first cause of the mechanical vibrations is then stored.

FIG. 1A

A

B

COMPARE ANALYTICAL DATA
TO REFERENCE DATA
TO DETERMINE CAUSE
110

STORE INFORMATION ON CAUSE
112

FIG. 1B

## Description

## TECHNICAL FIELD

The present disclosure relates generally to dispensers; and more specifically, to methods for monitoring a dispenser. Furthermore, the present disclosure also concerns dispensers equipped with at least one sensor.

## BACKGROUND

Washroom equipment, for example, such as towel, soap or toilet paper dispensers, typically require maintenance services from time-to-time. Therefore, it is desirable to detect events related to usage of such washroom equipment in an automated manner.

Conventionally, sensor units have been employed to detect usage events of washroom equipment. One conventional sensor unit employs magnetic movement sensors to detect a rotational movement of a roller of a towel dispenser. Another conventional sensor unit employs activation sensors based on infra-red, ultrasound, capacitive, and/or inductive principles.

Typically, a conventional sensor unit includes a microprocessor/microcontroller, which receives output signals from employed sensors. The microprocessor/microcontroller then processes the output signals to obtain analytical data. The microprocessor/microcontroller then sends the analytical data, via a communication network, to a server. At the server, the analytical data is stored and processed, for example, for collecting usage data and triggering certain actions.

However, the conventional techniques suffer from several disadvantages. Firstly, in conventional sensor units, a microprocessor/microcontroller continuously analyses output signals received from employed sensors, for example, using pattern recognition algorithms. Thus, the conventional sensor units have high power consumption, and therefore, require frequent battery replacement or recharging. Secondly, the conventional sensor units are equipment-specific, and work with only a specific type or model of equipment. In particular, sensors employed in towel dispensers differ considerably from sensors employed in soap dispensers. Thirdly, the conventional sensor units cannot be used to upgrade an old-generation equipment on field, by merely retrofitting the sensor units on the equipment. Some new-generation equipment may have a possibility for retrofitting the sensor units, but such equipment are not yet omnipresent. Fourthly, if a fleet operator has equipment from different manufacturers having different sensor units with incompatible operational and communication specifications, he/she faces a problem of realizing a single control and information system.

In light of the foregoing, there exists a need for a universal sensor solution that can be easily retrofitted to any equipment.

SUMMARY

The present disclosure seeks to provide an improved method for monitoring a dispenser.

The present disclosure also seeks to provide an improved dispenser.

A further aim of the present disclosure is to at least partially overcome at least some of the problems of the prior art, as discussed above.

In a first aspect, embodiments of the present disclosure provide a method for monitoring a dispenser, which dispenser is equipped with a processor, a communication interface and at least one sensor capable of sensing mechanical vibrations of the dispenser, the method comprising:

- continuously monitoring mechanical vibrations of the dispenser by the at least one sensor;

- initiating a first analysis of the mechanical vibrations by the processor, when a measure of the mechanical vibrations exceeds a pre-set threshold value, to obtain first analytical data;

- comparing the first analytical data to stored reference data to determine a first cause of the mechanical vibrations;

- storing information on the first cause of the mechanical vibrations; and

- terminating analysis of the mechanical vibrations after a pre-set time period.

In a second aspect, embodiments of the present disclosure provide a dispenser comprising:

- a memory;

- a processor coupled to the memory;

- a communication interface coupled to the processor; and

- at least one sensor coupled to the processor, wherein the at least one sensor is capable of sensing mechanical vibrations of the dispenser and is configured to initiate an analysis of the mechanical vibrations by the processor, when a measure of the mechanical vibrations exceeds a pre-set threshold value, and wherein the processor is configured to:

  - analyse the mechanical vibrations of the dispenser to obtain analytical data,

  - compare the analytical data to stored reference data to determine a cause of the mechanical vibrations, and

- store information on the cause of the mechanical vibrations..

Embodiments of the present disclosure substantially eliminate or at least partially address the aforementioned problems in the prior art.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

## BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

FIGs. 1A and 1B    collectively are an illustration of steps of a method for monitoring a dispenser, in accordance with an embodiment of the present disclosure;

FIG. 2    is a schematic illustration of a system for monitoring a plurality of dispensers, in accordance with an embodiment of the present disclosure;

FIGs. 3A and 3B    collectively are a schematic illustration of a dispenser and various components thereof, in accordance with an embodiment of the present disclosure;

FIG. 4    is a schematic illustration of a sensor unit, in accordance with an embodiment of the present disclosure;

FIG. 5    is a schematic illustration of a sensor unit, in accordance with another embodiment of the present disclosure;

FIG. 6    is a schematic illustration of a towel dispenser, in accordance with an embodiment of the present disclosure;

FIG. 7    is a schematic illustration of an example vibration response of a towel-pull event, in accordance with an embodiment of the present disclosure; and

FIG. 8    is a schematic illustration of different vibration responses corresponding to different events, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

## DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

GLOSSARY

Brief definitions of terms used throughout the present disclosure are given below.

The term "mechanical vibrations" encompasses structural sounds induced in a dispenser, an overall movement of the dispenser, and acoustical sounds transmitted via air.

The terms "connected" or "coupled" and related terms are used in an operational sense and are not necessarily limited to a direct connection or coupling. Thus, for example, two devices may be coupled directly, or via one or more intermediary media or devices. As another example, devices may be coupled in such a way that information can be passed there between, while not sharing any physical connection with one another. Based upon the present disclosure provided herein, one of ordinary skill in the art will appreciate a variety of ways in which connection or coupling exists in accordance with the aforementioned definition.

The terms "first", "second", and the like, herein do not denote any order, quantity, or importance, but rather are used to distinguish one element from another. Furthermore, the terms "a" and "an" herein do not denote a limitation of quantity, but rather denote the presence of at least one of the referenced item.

The phrases "in an embodiment", "in accordance with an embodiment" and the like generally mean the particular feature, structure, or characteristic following the phrase is included in at least one embodiment of the present disclosure, and may be included in more than one embodiment of the present disclosure. Importantly, such phrases do not necessarily refer to the same embodiment.

If the specification states a component or feature "may", "can", "could", or "might" be included or have a characteristic, that particular component or feature is not required to be included or have the characteristic.

EMBODIMENTS OF THE PRESENT DISCLOSURE

In a first aspect, embodiments of the present disclosure provide a method for monitoring a dispenser, which dispenser is equipped with a processor, a communication interface and at least one sensor capable of sensing mechanical vibrations of the dispenser, the method comprising:

- continuously monitoring mechanical vibrations of the dispenser by the at least one sensor;

- initiating a first analysis of the mechanical vibrations by the processor, when a measure of the mechanical vibrations exceeds a pre-set threshold value, to obtain first analytical data;

- comparing the first analytical data to stored reference data to determine a first cause of the mechanical vibrations;

- storing information on the first cause of the mechanical vibrations; and

- terminating analysis of the mechanical vibrations after a pre-set time period.

Optionally, the pre-set threshold value and the pre-set time period are system-defined by default. The pre-set time period can be any suitable time period, for example, such as 100 milliseconds, one second, five seconds, 10 seconds and so on. Optionally, in this regard, a timer is reset, for example, to a value '$t = 0$' when the first analysis is initiated. Alternatively, optionally, a real time clock, for example, such as a system clock is used to obtain an actual time of occurrence of an event with respect to the first cause of the mechanical vibrations.

According to an embodiment of the present disclosure, the dispenser is a towel dispenser. In this embodiment, the stored reference data comprises data indicated as characteristic of pulling out a towel, data indicated as characteristic of reeling in the towel and a period of time between pulling out and reeling in the towel.

According to another embodiment of the present disclosure, the dispenser is selected from the group consisting of a soap dispenser and a toilet paper dispenser. In this embodiment, the stored reference data is selected from the group consisting of data indicated as characteristic of dispensing soap and data indicated as characteristic of dispensing toilet paper.

According to an embodiment of the present disclosure, the method further comprises triggering actions on a display connected to the dispenser, based upon the first cause and/or the second cause of the mechanical vibrations. Indeed, for example in the case of a towel dispenser, the dispenser may display a first add when the towel is pulled out and a second add when the towel is reeled in.

According to an embodiment of the present disclosure, the method further comprises:

- initiating a second analysis of the mechanical vibrations by the processor, when the measure of the mechanical vibrations exceeds the pre-set threshold value, to obtain second analytical data;

- comparing the second analytical data to the stored reference data to determine a second cause of the mechanical vibrations;

- storing information on the second cause of the mechanical vibrations; and

- terminating analysis of the mechanical vibrations after the pre-set time period.

Optionally, the first cause of the mechanical vibrations pertains to a first event, while the second cause of the mechanical vibrations pertains to a second event that has occurred after the first event.

Moreover, according to an embodiment of the present disclosure, the method further comprises:

- storing information on a plurality of sequential causes of the mechanical vibrations;

- analysing at least two sequential causes to determine if a maintenance action is required to be performed on the dispenser; and

- sending a request for the maintenance action if the maintenance action is required to be performed on the dispenser.

Optionally, in this regard, the stored information on the plurality of sequential causes includes time-stamps associated therewith.

According to an embodiment of the present disclosure, the method further comprises:

- comparing the stored information on the first cause with the stored information on the second cause to determine if a maintenance action is required to be performed on the dispenser; and

- sending a request for the maintenance action if the maintenance action is required to be performed on the dispenser.

For illustration purposes only, there will now be considered examples scenarios encountered in towel dispensers, some of which require a maintenance action to be performed.

In a first example scenario, the first cause of the mechanical vibrations is an event of pulling out a towel (hereinafter referred to as a "towel-pull event", for the sake of convenience), and the second cause of the mechanical vibrations is an event of reeling in the towel (hereinafter referred to as a "towel-reel event", for the sake of convenience). In such a scenario, no maintenance action may be required.

In a second example scenario, the first cause is a towel-pull event and the second cause is also a towel-pull event. This happens when a functionality of reeling in fails. This is a common failure scenario encountered in towel dispensers and is called "towel-on-the-floor".

Detecting this failure scenario is valuable, as a request for a maintenance action can then be sent to alert service personnel to perform a required maintenance action. Moreover, statistical data pertaining to occurrences of towel-on-the-floor scenarios is valuable for stakeholders, for example, such as a fleet operator, an equipment manufacturer, a maintenance company and a property owner.

It will be appreciated that a towel-reel event is performed automatically to take up a used towel within a certain time period from a towel-pull event. Therefore, a time-gating window can be implemented to detect an occurrence of the towel-on-the-floor scenario. Optionally, in this regard, when comparing the stored information on the first cause with the stored information on the second cause, the method comprises determining whether or not a towel-pull event is followed by a towel-reel event within a pre-set time-gating window. If a towel-pull event is not followed by a towel-reel event within the pre-set time-gating window, the towel-on-the-floor scenario is detected to have occurred. In order to avoid false alerts, such comparison is made for a plurality of sequential causes. If the towel-reel event is missed more than once, the towel-on-the-floor scenario is detected to have occurred.

In a third example scenario, the first cause is a towel-pull event and the second cause is a towel-reel event, but a time delay between the towel-pull event and the towel-reel event is too short. An occurrence of such a condition can be detected using the aforementioned time-gating window. As an example, an occurrence of this condition is detected, if the towel-reel event occurs, but is not detected in the pre-set time-gating window.

It will be appreciated that the time delay between the towel-pull event and the towel-reel event is controlled by a mechanical timer. Detecting this failure scenario is valuable, as a request for a maintenance action can then be sent to alert service personnel to perform a required maintenance action.

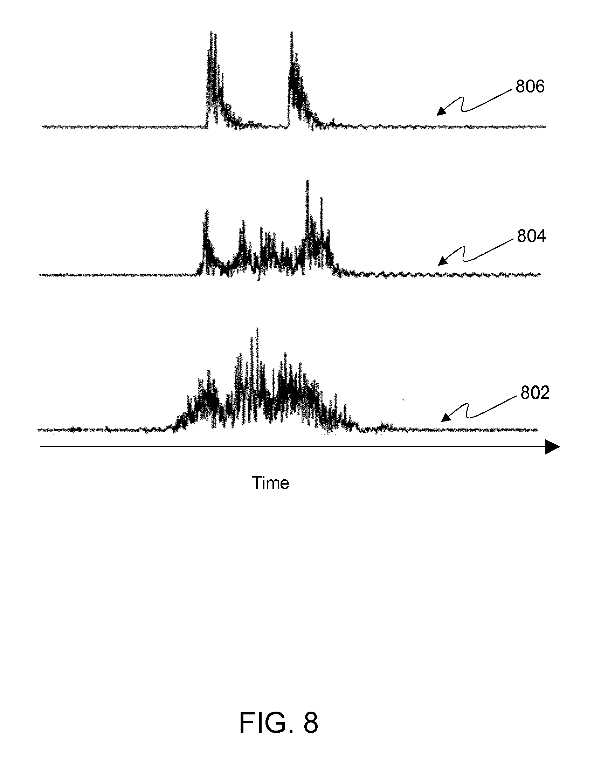

Furthermore, according to an embodiment of the present disclosure, the method further comprises distinguishing between the first cause of the mechanical vibrations and the second cause of the mechanical vibrations by employing a pattern recognition algorithm. As an example, a pattern recognition algorithm can be employed to distinguish between a towel-pull event and a towel-reel event, for example, based upon differences in at least one of: leading and trailing edges of respective responses thereof, a magnitude of the respective responses and/or a duration of the respective responses. An example of different possible events and their respective responses has been illustrated in conjunction with FIG. 8.

Moreover, according to an embodiment of the present disclosure, the method further comprises:

- analysing the first cause of the mechanical vibrations to determine if a maintenance action is required to be performed on the dispenser; and

- sending a request for the maintenance action if the maintenance action is required to be performed on the dispenser.

Optionally, analysing the first cause of the mechanical vibrations to determine if a maintenance action is required to be performed on the dispenser comprises analysing the stored information on the first cause of the mechanical vibrations to determine if a regular maintenance action is required to be performed on the dispenser.

According to an embodiment of the present disclosure, the maintenance action is selected from the group consisting of refilling the dispenser, resolving a jam in the dispenser, resolving an anomaly in the functioning of the dispenser, replacing a part of the dispenser, lubricating a part of the dispenser and replacing the dispenser. Optionally, the regular maintenance action is selected from the group consisting of refilling the dispenser, resolving a jam in the dispenser and resolving an anomaly in the functioning of the dispenser.

Moreover, optionally, the aforementioned steps of determining if a maintenance action is required and of sending a request for a maintenance action are performed by a server that is remote from the dispenser. For this purpose, optionally, the stored information on the first cause and/or the stored information on the second cause and/or the stored information on the plurality of sequential causes are sent from the dispenser to the server.

Additionally or alternatively, optionally, the first analytical data and/or the second analytical data are sent from the dispenser to the server.

Optionally, in this regard, the method further comprises storing the first analytical data and/or the second analytical data to be used in future comparison.

Furthermore, according to an embodiment of the present disclosure, the measure of the mechanical vibrations corresponds to a magnitude of acceleration. Optionally, the mechanical vibrations are monitored based upon a magnitude of at least one Cartesian component of the acceleration.

Optionally, the monitoring of the mechanical vibrations is performed by calculating a time-integral of a magnitude of acceleration, and the first analysis and/or the second analysis are initiated when a value of the time-integral exceeds the pre-set threshold value. Thus, the first analysis and/or the second analysis are initiated without a need for complicated pattern recognition techniques.

Optionally, in this regard, the at least one sensor is implemented by way of an accelerometer that is coupled to the processor.

Pursuant to embodiments of the present disclosure, the processor wakes up only when the measure of the mechanical vibrations exceeds the pre-set threshold value. Optionally, for this purpose, the at least one sensor is implemented by way of a micro-electromechanical accelerometer, for example, such as STM LIS3DH by ST Microelectronics. Such a micro-electromechanical accelerometer typically has low power consumption, typically tens of microamperes or even less. The micro-electromechanical accelerometer is capable of detecting when the measure of mechanical vibrations has exceeded the pre-set threshold value, to wake up the processor to perform operations as elucidated earlier. This potentially allows the at least one sensor and the processor to be implemented in a battery-based arrangement with a long battery-replacement interval.

Additionally or alternatively, optionally, the at least one sensor includes at least one piezo-microphone that is coupled to the processor via an amplifier. The amplifier amplifies an audio signal generated by the at least one piezo-microphone, and feeds the amplified signal into the processor. When a measure of the amplified signal (for example, an amplitude of the amplified signal) exceeds the pre-set threshold value, the processor wakes up and initiates the analysis.

Moreover, optionally, the at least one sensor includes a plurality of piezo-microphones, wherein the plurality of piezo-microphones are used for vibration source localization, namely to locate a source of sound, for example, using a "stereo-effect" and/or a phased-array detection. This potentially enables the processor to distinguish between different events.

It will be appreciated that the mechanical vibrations can have a multitude of origin. For example, a towel-pull event induces considerable mechanical vibrations, which are transferred to the at least one sensor as a structural sound as well as an overall movement of the dispenser. In addition, a sound transmitted via air also reaches the at least one sensor. Therefore, the term "mechanical vibrations" is used in a generalized sense to include the structural sound, the overall movement of the dispenser and the sound transmitted via air.

Depending on a type of the at least one sensor and how the at least one sensor is attached to the dispenser, a response to various components of the mechanical vibrations may be different. As an example, a micro-electromechanical accelerometer is better suited for detection of structural vibrations including the overall movement of the dispenser, rather than for detection of sounds transmitted via air. As another example, a piezo-microphone glued to a housing of the dispenser is better suited for detection of sound, especially the structural sound, rather than for detection of an overall acceleration of the housing, namely the overall movement of the dispenser.

Thus, depending on an application, a configuration of sensors, namely a number and/or a type of sensors, may be varied.

In one example implementation, it may be sufficient to detect that the measure of the mechanical vibrations has exceeded the pre-set threshold value. This can be sufficient in a case of a soap dispenser. In a case of a towel dispenser, distinguishing between a towel-pull event and a towel-reel event, for example, via pattern recognition may not be required in certain simple cases. As an example, it may be sufficient to just know an amount of towel pulls; in such a case, both the towel-pull event and the towel-reel event can be recognized as a single event, and a towel-pull counter can be increased only by every second event.

In a second aspect, embodiments of the present disclosure provide a dispenser comprising:

- a memory;

- a processor coupled to the memory;

- a communication interface coupled to the processor; and

- at least one sensor coupled to the processor, wherein the at least one sensor is capable of sensing mechanical vibrations of the dispenser and is configured to initiate an analysis of the mechanical vibrations by the processor, when a measure of the mechanical vibrations exceeds a pre-set threshold value, and wherein the processor is configured to:

  - analyse the mechanical vibrations of the dispenser to obtain analytical data,

  - compare the analytical data to stored reference data to determine a cause of the mechanical vibrations, and

  - store information on the cause of the mechanical vibrations.

According to an embodiment of the disclosure, the processor is further configured to analyse the cause of the mechanical vibrations to determine if an action is required to be performed on the dispenser, and to send a request for action, via the communication interfave, when an action is required to be performed on the dispenser.

According to an embodiment of the present disclosure, the at least one sensor is an accelerometer. Optionally, in this regard, the measure of the mechanical vibrations corresponds to a magnitude of acceleration. More optionally, the measure of the mechanical vibrations corresponds to a magnitude of at least one Cartesian component of the acceleration.

Pursuant to embodiments of the present disclosure, the processor wakes up only when the measure of the mechanical vibrations exceeds the pre-set threshold value. Optionally, for this purpose, the at least one sensor is implemented by way of a micro-electromechanical accelerometer, for example, such as STM LIS3DH by ST Microelectronics. Such a micro-electromechanical accelerometer typically has low power consumption, typically tens of microamperes or even less. The micro-electromechanical accelerometer is capable of detecting when the measure of mechanical vibrations has exceeded the pre-set threshold value, to wake up the processor to perform operations as elucidated earlier. This potentially allows the at least one sensor and the processor to be implemented in a battery-based arrangement with a long battery-replacement interval.

Additionally or alternatively, optionally, the at least one sensor includes at least one piezo-microphone that is coupled to the processor via an amplifier. The amplifier amplifies an audio signal generated by the at least one piezo-microphone, and feeds the amplified signal into the processor. When a measure of the amplified signal (for example, an amplitude of the amplified signal) exceeds the pre-set threshold value, the processor wakes up and initiates the analysis.

Moreover, optionally, the at least one sensor includes a plurality of piezo-microphones, wherein the plurality of piezo-microphones are used for vibration source localization, namely to locate a source of sound, for example, using a "stereo-effect" and/or a phased-array detection. This potentially enables the processor to distinguish between different events.

Depending on a type of the at least one sensor and how the at least one sensor is attached to the dispenser, a response to various components of the mechanical vibrations may be different. As an example, a micro-electromechanical accelerometer is better suited for detection of structural vibrations including an overall movement of the dispenser, rather than for detection of sounds transmitted via air. As another example, a piezo-microphone glued to a housing of the dispenser is better suited for detection of sound, especially the structural sound, rather than for detection of an overall acceleration of the housing, namely the overall movement of the dispenser.

Thus, depending on an application, a configuration of sensors, namely a number and/or a type of sensors, may be varied.

Optionally, the memory and the processor are implemented by way of a microcontroller.

The memory optionally includes non-removable memory, removable memory, or a combination thereof. The non-removable memory, for example, includes Random-Access Memory (RAM), Read-Only Memory (ROM), flash memory, or a hard drive. The removable memory, for example, includes flash memory cards, memory sticks, or smart cards.

The memory stores a software product that includes program instructions pursuant to embodiments of the present disclosure, while the processor is operable to execute the software product. Executing the software product on the processor enables the processor to perform operations as described with respect to the aforementioned second aspect.

Optionally, the communication interface is a wireless communication interface. Optionally, the communication interface is a radio communication interface.

Optionally, the communication interface enables the processor to access services provided by a remote server, for example, via a communication network. Additionally, optionally, the communication interface enables the processor to download software updates from the remote server.

According to an embodiment of the present disclosure, the memory, the processor, the communication interface and the at least one sensor are implemented together by way of an integrated sensor unit.

Optionally, the sensor unit includes a power source for supplying electrical power to various components of the sensor unit. The power source may, for example, include a rechargeable battery.

Alternatively, optionally, the sensor unit draws electrical power from a power source of the dispenser.

Optionally, the sensor unit is a separate entity, and is detachably attached to the dispenser. Optionally, the sensor unit is mechanically attached to the dispenser, without a need for electrical wiring or special mechanical arrangements. Thus, the sensor unit is easy to install.

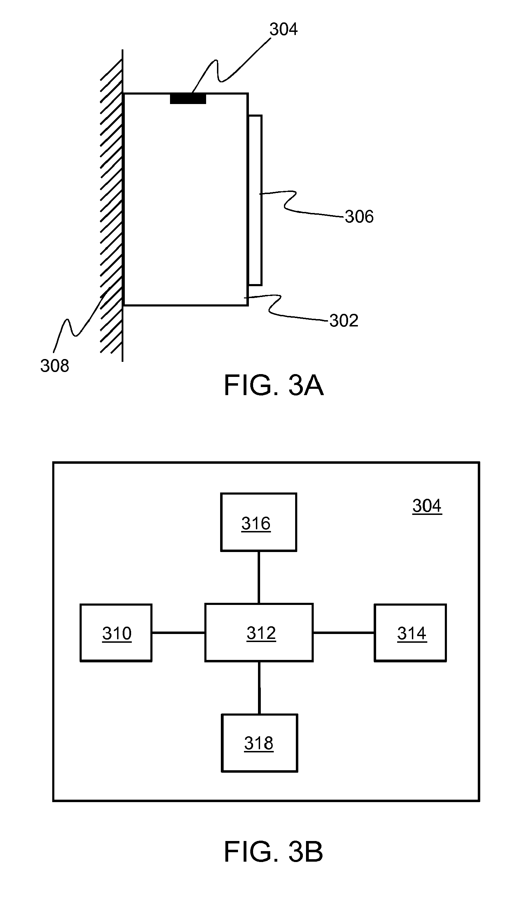

Optionally, the sensor unit is mechanically attached to a housing of the dispenser, using an adhesive, for example, such as 3M VHB double-sided tape ("3M" and "VHB" are registered trademarks). As an example, the sensor unit can be attached inside the housing of the dispenser as illustrated in FIG. 3A.

It will be appreciated that there is a considerable freedom in choosing a mounting location for the sensor unit within the dispenser, as the mechanical vibrations govern an entire mechanical structure of the dispenser.

Optionally, the sensor unit is made compact in size. This potentially allows the sensor unit to fit inside different types and models of dispensers. In particular, a compact sensor unit can be conveniently utilized in the case of soap dispensers, which are typically smaller in size than other types of dispensers, namely towel dispensers and toilet paper dispensers.

Moreover, optionally, the sensor unit is reconfigurable. Optionally, the sensor unit is configured to adapt to a specific type and/or model of dispenser by way of software-based changes and/or updates, without a need for hardware changes. Thus, the sensor unit can be reconfigured conveniently.

Such reconfiguration is based on a fact that characteristic mechanical vibrations differ from one type and/or model of dispenser to another type and/or model of dispenser.

Optionally, such reconfiguration is performed at a factory or on field, namely at a location where the dispenser is installed for use. Additionally or alternatively, optionally, the sensor unit is self-adapting, and is configured to learn automatically from the analytical data a type and/or model of dispenser in which the sensor unit has been installed.

According to an embodiment of the present disclosure, the dispenser is selected from the group consisting of a towel dispenser, a toilet paper dispenser and a soap dispenser.

Optionally, when the dispenser is a towel dispenser, the stored reference data comprises data indicated as characteristic of pulling out a towel, data indicated as characteristic of reeling in the towel and a period of time between pulling out and reeling in the towel.

Optionally, when the dispenser is a soap dispenser, the stored reference data comprises data indicated as characteristic of dispensing soap.

Likewise, optionally, when the dispenser is a toilet paper dispenser, the stored reference data comprises data indicated as characteristic of dispensing toilet paper.

According to an embodiment of the present disclosure, the action is a maintenance action that is selected from the group consisting of refilling the dispenser, resolving a jam in the dispenser, resolving an anomaly in the functioning of the dispenser, replacing a part of the dispenser, lubricating a part of the dispenser and replacing the dispenser.

Moreover, according to an embodiment of the present disclosure, the dispenser comprises a display coupled to the processor. Optionally, the processor is configured to trigger actions on the display, based upon the cause of the mechanical vibrations.

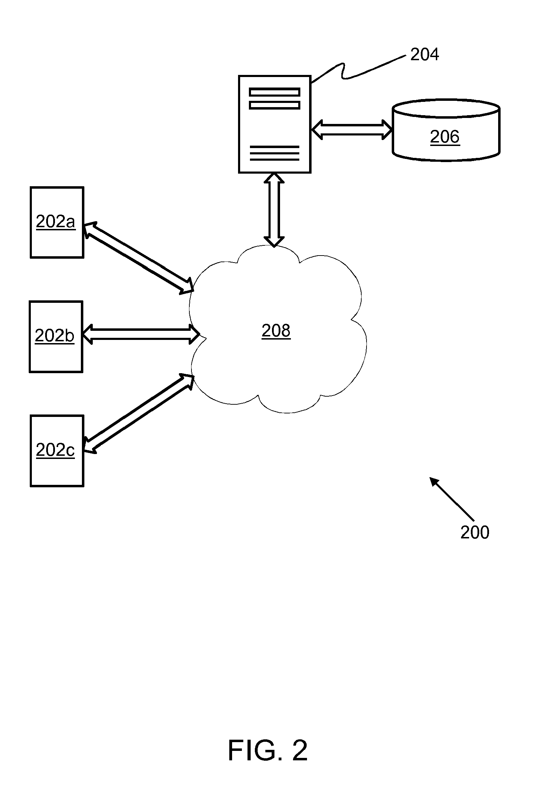

Furthermore, embodiments of the present disclosure provide a system for monitoring a plurality of dispensers. An example of a system for monitoring a plurality of dispensers has been illustrated in conjunction with FIG. 2 as will be elucidated in more detail below.

The system comprises the plurality of dispensers, each of which is optionally implemented in a manner as explained in the aforementioned second aspect. The plurality of dispensers can be installed at different locations.

The system also comprises a server and a database associated therewith. The server is coupled in communication with the plurality of dispensers, via a communication network.

The communication network can be a collection of individual networks, interconnected with each other and functioning as a single large network. Such individual networks may be wired, wireless, or a combination thereof. Examples of such individual networks include, but are not limited to, Local Area Networks (LANs), Wide Area Networks (WANs), Metropolitan Area Networks (MANs), Wireless LANs (WLANs), Wireless WANs (WWANs), Wireless MANs (WMANs), the Internet, second generation (2G) telecommunication networks, third generation (3G) telecommunication networks, fourth generation (4G) telecommunication networks, Worldwide Interoperability for Microwave Access (WiMAX) networks, and short-range wireless communications network, such as a "Bluetooth" network ("Bluetooth" is a registered trademark).

When a user uses a given dispenser, a sensor unit within the given dispenser analyses mechanical vibrations caused by the use of the given dispenser to obtain corresponding analytical data.

Optionally, the sensor unit is configured to compare the analytical data to stored reference data to determine a cause of the mechanical vibrations, and to send the analytical data and/or information on the cause of mechanical vibrations to the server.

Additionally or alternatively, optionally, the sensor unit is configured to send the analytical data to the server, wherein the sensor is configured to compare the analytical data to reference data, stored at the database, to determine a cause of the mechanical vibrations. Optionally, in this regard, the sensor unit is configured to send at least a part of measurement data collected by at least one sensor of the sensor unit to the server.

Optionally, the server is configured to analyse the at least a part of the measurement data with respect to the information on the cause received from the sensor unit, so as to determine whether or not a software product employed at the sensor unit requires a software update. Accordingly, the server is configured to send a software update to the sensor unit, when the software product requires the software update. Optionally, such software updates are sent from time to time, namely as and when required.

Such a software update may be required, for example, when an occurrence of a new type of cause of mechanical vibrations is found. As an example, a power of mechanical vibrations can be analysed to determine whether a towel-pull event was performed by a man or a woman. The power of the mechanical vibrations can be measured, for example, by way of an amplitude of acceleration.

Moreover, optionally, at least one of the sensor unit and/or the server is configured to analyse the cause of the mechanical vibrations to determine if a maintenance action is required to be performed on the given dispenser. Optionally, in this regard, if a maintenance action is required to be performed on the given dispenser, the at least one of the sensor unit and/or the server is configured to send a request for the maintenance action to a concerned party, for example, such as service personnel.

Optionally, at least one of the sensor unit and/or the server is configured to analyse the cause of the mechanical vibrations to determine a content item to be displayed on a display associated with the given dispenser. As an example, a detection of a towel-pull event can be used to trigger a display of a content item on the display.

Optionally, the server is configured to collect statistical data pertaining to usage of the given dispenser. As an example, for a given towel dispenser, the server can collect statistical data pertaining to a number of towel-pull events and towel-reel events. As another example, for a given soap dispenser, the server can collect statistical data pertaining to a number of soap-dispensing events.

Optionally, the server is configured to analyse the statistical data pertaining to the usage of the given dispenser, so as to determine if a regular maintenance action is required to be performed on the given dispenser. Examples of the regular maintenance action include, but are not limited to, refilling the given dispenser, replacing a wearable part of the dispenser, lubricating a part of the dispenser, and replacing the dispenser.

In this manner, the server is configured to monitor the plurality of dispensers.

Optionally, the server is configured to compare analytical data and/or information on causes of mechanical vibrations received from the plurality of dispensers, so as to determine a new set of rules to be used to determine causes of mechanical vibrations in future.

Optionally, the server is configured to store the collected statistical data for further analysis. Optionally, the collected statistical data is further analysed for logistics or business optimization purposes.

Optionally, the collected statistical data is further analysed to allocate resources for performing maintenance actions in an optimized manner. As an example, during failure, dispensers that are used more frequently can be given a higher priority for maintenance, as compared to other dispensers that are used less frequently.

Moreover, optionally, the collected statistical data is further analysed to determine where more dispensers are required to be installed.

The system may be implemented in various ways, depending on various possible scenarios. In one example implementation, the system is implemented by way of a spatially collocated arrangement of the server and the database. In another example implementation, the system is implemented by way of a spatially distributed arrangement of the server and the database coupled mutually in communication via a communication network. In yet another example implementation, the server and the database are implemented by way of cloud computing services.

**DETAILED DESCRIPTION OF DRAWINGS**

Referring now to the drawings, particularly by their reference numbers,

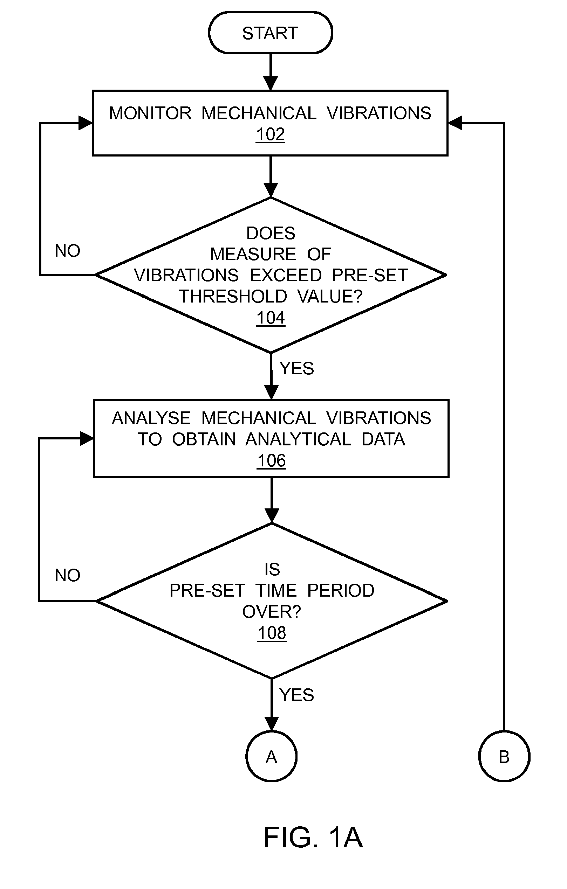

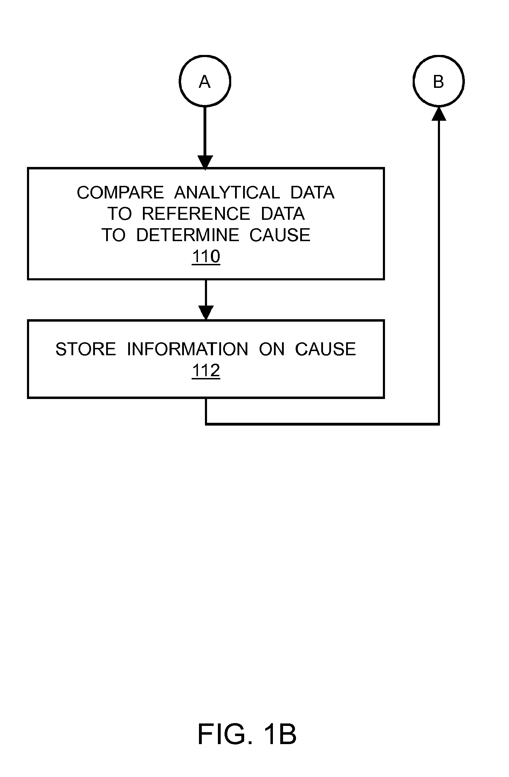

FIGs. 1A and 1B collectively are an illustration of steps of a method for monitoring a dispenser, in accordance with an embodiment of the present disclosure. The method is depicted as a collection of steps in a logical flow diagram, which represents a sequence of steps that can be implemented in hardware, software, or a combination thereof.

The dispenser is equipped with a processor, a communication interface and at least one sensor capable of sensing mechanical vibrations of the dispenser.

At a step **102**, the at least one sensor monitors mechanical vibrations of the dispenser.

At a step **104**, it is checked whether or not a measure of the mechanical vibrations exceeds a pre-set threshold value.

If, at the step **104**, it is found that the measure of the mechanical vibrations exceeds the pre-set threshold value, a step **106** is performed. Otherwise, if it is found that the measure of the mechanical vibrations does not exceed the pre-set threshold value, the step **102** is repeated.

At the step **106**, the processor initiates an analysis of the mechanical vibrations to obtain corresponding analytical data. Optionally, a timer is reset and started along with the initiation of the analysis.

Next, at a step **108**, it is checked whether or not a pre-set time period is over.

If, at the step **108**, it is found that the pre-set time period is over, the analysis of the mechanical vibrations is terminated, and the corresponding analytical data is obtained.

Otherwise, if it is found that the pre-set time period is not over, the step **106** is performed till the pre-set time period is over.

Next, at a step **110**, the processor compares the analytical data to stored reference data to determine a cause of the mechanical vibrations.

Subsequently, at a step **112**, the processor stores information on the cause of the mechanical vibrations. The processing then continues to the step **102**, whereby the mechanical vibrations are continuously monitored by the at least one sensor.

The steps **102** to **112** are only illustrative and other alternatives can also be provided where one or more steps are added, one or more steps are removed, or one or more steps are provided in a different sequence without departing from the scope of the claims herein.

FIG. 2 is a schematic illustration of a system **200** for monitoring a plurality of dispensers, in accordance with an embodiment of the present disclosure. The system **200** includes a plurality of dispensers, depicted as dispensers **202a, 202b** and **202c** in FIG. 2. The system **200** also includes a server **204** and a database **206** associated therewith.

The server **204** is coupled in communication with the dispensers **202a, 202b** and **202c**, via a communication network **208**.

FIG. 2 is merely an example, which should not unduly limit the scope of the claims herein. It is to be understood that the specific designation for the system **200** is provided as an example and is not to be construed as limiting the system **200** to specific numbers or types of dispensers, servers, databases and communication networks. A person skilled in the art will recognize many variations, alternatives, and modifications of embodiments of the present disclosure.

FIGs. 3A and 3B collectively are a schematic illustration of a dispenser **302** and various components thereof, in accordance with an embodiment of the present disclosure.

With reference to FIG. 3A, the dispenser **302** is equipped with a sensor unit **304** and a display **306**, and is installed at a location **308**.

Optionally, the sensor unit **304** is mechanically attached to a housing of the dispenser **302**, as shown in FIG. 3A.

It will be appreciated that a mounting location of the sensor unit **304** in FIG. 3A is only indicative, and there is a considerable freedom in choosing a mounting location for the sensor unit **304** within the dispenser **302**, as mechanical vibrations govern an entire mechanical structure of the dispenser **302**.

With reference to FIG. 3B, the sensor unit **304** includes, but is not limited to, a memory **310**, a processor **312**, at least one sensor **314**, a communication interface **316** and a power source **318**.

FIGs. 3A-B are merely examples, which should not unduly limit the scope of the claims herein. It is to be understood that the specific designation for the dispenser **302** is provided as an example and is not to be construed as limiting the dispenser **302** to specific numbers, types, or arrangements of modules and/or components of the dispenser **302**. A person skilled in the art will recognize many variations, alternatives, and modifications of embodiments of the present disclosure. For example, the dispenser **302** could be implemented as the dispensers **202a, 202b** and **202c**, and vice versa.

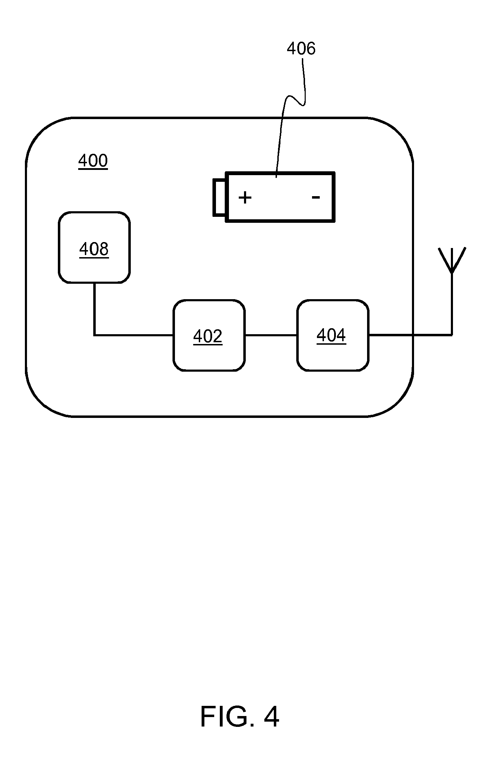

FIG. 4 is a schematic illustration of a sensor unit **400**, in accordance with an embodiment of the present disclosure.

The sensor unit **400** includes, but is not limited to, a microcontroller **402**, a communication interface **404**, a power source **406**, and an accelerometer **408**.

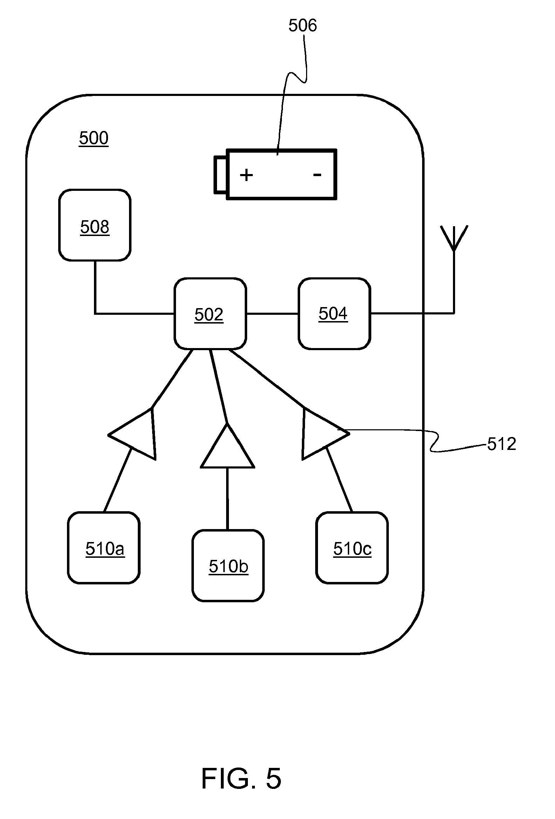

FIG. 5 is a schematic illustration of a sensor unit **500**, in accordance with another embodiment of the present disclosure.

The sensor unit **500** includes, but is not limited to, a microcontroller **502**, a communication interface **504**, a power source **506**, an accelerometer **508**, piezo-microphones **510a, 510b** and **510c**, and associated amplifiers **512**.

FIGs. 4 and 5 are merely examples, which should not unduly limit the scope of the claims herein. A person skilled in the art will recognize many variations, alternatives, and modifications of embodiments of the present disclosure.

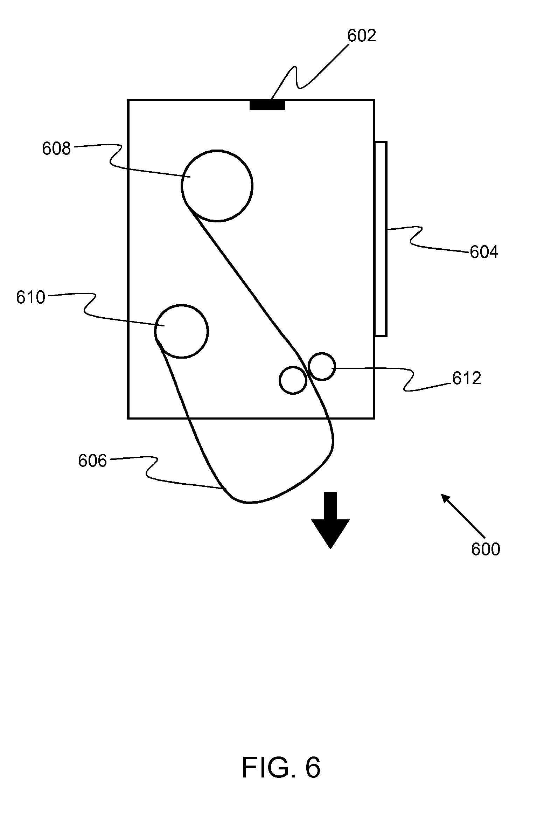

FIG. 6 is a schematic illustration of a towel dispenser **600**, in accordance with an embodiment of the present disclosure.

The towel dispenser **600** is equipped with a sensor unit **602** and a display **604**.

The towel dispenser **600** is used to dispense a towel **606**. An unused part of the towel **606** is stored in an upper roll **608**. When a user pulls the towel **606** (indicated by a down-pointing arrow), a towel-pull event occurs. When a used part of the towel **606** is reeled in by a lower roll **610**, a towel-reel event occurs. Typically, the towel-pull event induces mechanical vibrations, due to a rotation of rollers **612**; while the towel-reel event induces mechanical vibrations, due to spring loading of the lower roll **610**.

Meanwhile, the sensor unit **602** monitors the mechanical vibrations induced by the towel-pull event and the towel-reel event, and performs subsequent operations as described earlier.

FIG. 6 is merely an example, which should not unduly limit the scope of the claims herein. A person skilled in the art will recognize many variations, alternatives, and modifications of embodiments of the present disclosure.

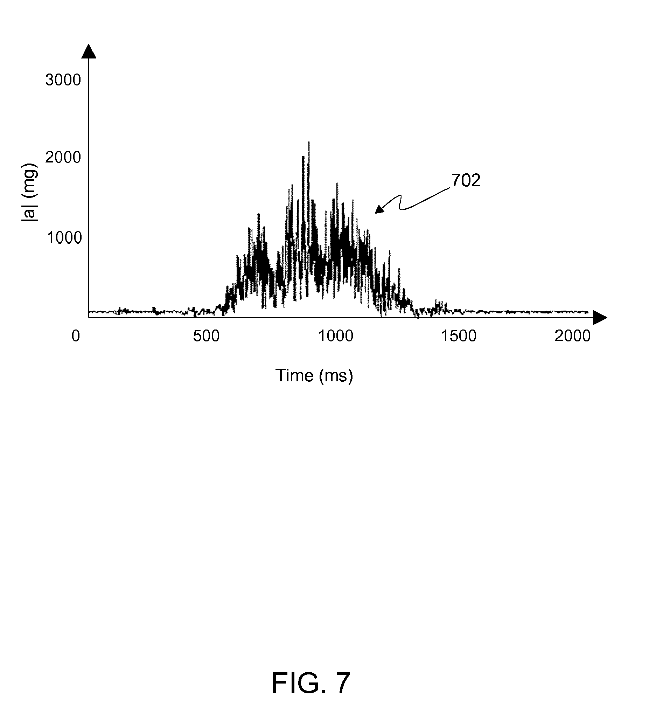

FIG. 7 is a schematic illustration of an example vibration response **702** of a towel-pull event, in accordance with an embodiment of the present disclosure.

The vibration response **702** is plotted as a magnitude of acceleration versus time. The magnitude of acceleration is measured as follows:

$$|a| = \mathrm{sqrt}\left(a_x^2 + a_y^2 + a_z^2\right)$$

, where

'|a|' represents the magnitude of acceleration, and

'$a_x$', '$a_y$' and '$a_z$' represent x, y and z components of acceleration, respectively.

The magnitude of acceleration is measured in milli-g (mg), where g is equal to 9.81 m/s$^2$, while the time is measured in milliseconds (ms). A sampling rate employed for the measurement is 1.25 kilo Samples per second (kSa/s).

The vibration response **702** has been measured using a micro-electromechanical accelerometer, "STM LIS3DH" by ST Microelectronics, attached inside a housing of a towel dispenser, "CWS-Boco Paradise Dry" by Complete Washroom Solutions (CWS) Boco.

It is evident that the towel-pull event can be recognized easily as a substantial signature in the vibration response **702**, and has a duration of approximately 1 second.

FIG. 8 is a schematic illustration of different vibration responses corresponding to different events, in accordance with an embodiment of the present disclosure.

In FIG. 8, there are shown three different vibration responses **802, 804** and **806** that have been measured using a same setup as used for measuring the vibration response **702** of FIG. 7.

The vibration response **802** pertains to a towel-pull event, while the vibration response **804** pertains to a towel-reel event. The vibration responds **806** pertains to an event in which a user knocks the towel dispenser twice using his/her hand (hereinafter referred to as a "knock event", for the sake of convenience).

Although the towel-pull event, the towel-reel event, and the knock event have occurred at a different time from each other, their respective vibration responses **802, 804** and **806** have been shown together for ease of comparison.

A comparison between the vibration responses **802** and **804** reveals that the towel-pull event and the towel-reel event can be distinguished from each other, based upon characteristic features of the vibration responses **802** and **804**. As an example, rising and decaying edges of the vibration response **804** are much sharper than that of the vibration response **802**.

A comparison between the vibration response **806** and the vibration responses **802** and **804** reveals that the knock event can be distinguished easily from the towel-pull and towel-reel events. In particular, duration of the vibration response **806** is much shorter than that of the vibration responses **802** and **804**.

FIGs. 7 and 8 are merely examples, which should not unduly limit the scope of the claims herein. A person skilled in the art will recognize many variations, alternatives, and modifications of embodiments of the present disclosure.

Modifications to embodiments of the present disclosure described in the foregoing are possible without departing from the scope of the present disclosure as defined by the accompanying claims. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A method for monitoring a dispenser, which dispenser is equipped with a processor, a communication interface and at least one sensor capable of sensing mechanical vibrations of the dispenser, the method comprising:

   - continuously monitoring mechanical vibrations of the dispenser by the at least one sensor;
   - initiating a first analysis of the mechanical vibrations by the processor, when a measure of the mechanical vibrations exceeds a pre-set threshold value, to obtain first analytical data;
   - comparing the first analytical data to stored reference data to determine a first cause of the mechanical vibrations;
   - storing information on the first cause of the mechanical vibrations; and
   - terminating analysis of the mechanical vibrations after a pre-set time period.

2. A method according to claim 1, wherein the method further comprises:

   - initiating a second analysis of the mechanical vibrations by the processor, when the measure of the mechanical vibrations exceeds the pre-set threshold value, to obtain second analytical data;
   - comparing the second analytical data to stored reference data to determine a second cause of the mechanical vibrations;
   - storing information on the second cause of the mechanical vibrations; and
   - terminating analysis of the mechanical vibrations after the pre-set time period.

3. A method according to any of the preceding claims, wherein the measure of the mechanical vibrations corresponds to a magnitude of acceleration.

4. A method according to claim 3, wherein the monitoring of the mechanical vibrations is performed by calculating a time-integral of the magnitude of acceleration, and the analysis is initiated when a value of the time-integral exceeds the pre-set threshold value.

5. A method according to any of the preceding claims, wherein the method further comprises triggering actions on a display connected to the dispenser, based upon the first cause or the second cause of the mechanical vibrations.

6. A method according to any of the preceding claims, wherein the method further comprises:

   - comparing the stored information on the first cause with the stored information on the second cause to determine if a maintenance action is required to be performed on the dispenser; and

- sending a request for the maintenance action if the maintenance action is required to be performed on the dispenser.

7. A method according to any of the preceding claims, wherein the method further comprises:

- analysing the first cause of the mechanical vibrations to determine if a maintenance action is required to be performed on the dispenser; and
- sending a request for the maintenance action if the maintenance action is required to be performed on the dispenser.

8. A method according to claim 7, wherein analysing the first cause of the mechanical vibrations to determine if the maintenance action is required to be performed on the dispenser comprises analysing the stored information on the first cause of the mechanical vibrations to determine if a regular maintenance action is required to be performed on the dispenser.

9. A method according to claim 8, wherein the maintenance action is selected from the group consisting of refilling the dispenser, resolving a jam in the dispenser, resolving an anomaly in the functioning of the dispenser, replacing a part of the dispenser, lubricating a part of the dispenser and replacing the dispenser.

10. A method according to any of the preceding claims, wherein the dispenser is a towel dispenser, and the stored reference data comprises data indicated as characteristic of pulling out the towel, data indicated as characteristic of reeling in the towel and a period of time between pulling out and reeling in the towel.

11. A method according to any of the claims 1-9, wherein the dispenser is selected from the group consisting of a soap dispenser and a toilet paper dispenser, and the stored reference data is selected from the group consisting of data indicated as characteristic of dispensing soap and data indicated as characteristic of dispensing toilet paper.

12. A method according to any of the preceding claims, wherein the method further comprises storing the analytical data to be used in future comparison.

13. A dispenser comprising:

- a memory;
- a processor coupled to the memory;
- a communication interface coupled to the processor; and
- at least one sensor coupled to the processor, wherein the at least one sensor is capable of sensing mechanical vibrations of the dispenser and is configured to initiate an analysis of the mechanical vibrations by the processor, when a measure of the mechanical vibrations exceeds a pre-set threshold value, and wherein the processor is configured to:

- analyse the mechanical vibrations of the dispenser to obtain analytical data,
- compare the analytical data to stored reference data to determine a cause of the mechanical vibrations,
- store information on the cause of the mechanical vibrations, and
- analyse the cause of the mechanical vibrations to determine if an action is required to be performed on the dispenser.

14. A dispenser according to claim 13, wherein the dispenser is selected from the group consisting of a towel dispenser, a toilet paper dispenser and a soap dispenser.

15. A dispenser according to claim 13 or 14, wherein the at least one sensor is an accelerometer.

FIG. 1A

A

B

COMPARE ANALYTICAL DATA
TO REFERENCE DATA
TO DETERMINE CAUSE
110

STORE INFORMATION ON CAUSE
112

FIG. 1B

FIG. 2

FIG. 3A

FIG. 3B

FIG. 4

FIG. 5

FIG. 6

FIG. 7

806

804

802

Time

FIG. 8

Europäisches
Patentamt

European
Patent Office

Office européen
des brevets

# EUROPEAN SEARCH REPORT

**Application Number**

EP 15 18 2710

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/065515 A2 (KIMBERLY CLARK CO [US]; GOERG CHARLES H [US]; MITCHELL JOSEPH [US]; NG) 22 June 2006 (2006-06-22)<br>* page 5, line 22 - line 28 *<br>* page 9, line 14 - line 15 *<br>* page 14, line 16 - line 18 *<br>* page 21, line 31 - page 22, line 12 *<br>* page 41, line 30 - line 31 *<br>* page 44, line 10 - line 11 *<br>* page 64, line 27 - line 30 *<br>* page 64, line 14 - line 16 *<br>* page 65, line 13 - line 18 *<br>* page 24, line 7 - line 12 *<br>* figures 4, 8, 41 *<br>----- | 1-5,7-9, 11-15 | INV.<br>B65H43/02<br>B65H7/02<br>A47K10/24<br>G01H1/00 |
| X<br>A | US 2009/306817 A1 (ANTAO LEONARD F [US] ET AL) 10 December 2009 (2009-12-10)<br>* abstract *<br>* figure 1c *<br>* paragraph [0073] *<br>----- | 1<br>2-15 | |
|  |  |  | TECHNICAL FIELDS SEARCHED (IPC)<br>B65H<br>A47K<br>G01H |

The present search report has been drawn up for all claims

| Place of search | Date of completion of the search | Examiner |
|---|---|---|
| The Hague | 11 February 2016 | Tympel, Jens |

EPO FORM 1503 03.82 (P04C01)

## ANNEX TO THE EUROPEAN SEARCH REPORT
## ON EUROPEAN PATENT APPLICATION NO.

EP 15 18 2710

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2016

| Patent document cited in search report | Publication date | Patent family member(s) | Publication date |
|---|---|---|---|
| WO 2006065515 A2 | 22-06-2006 | CA 2586423 A1 | 22-06-2006 |
| | | CA 2844890 A1 | 22-06-2006 |
| | | CN 101828885 A | 15-09-2010 |
| | | EP 1824369 A2 | 29-08-2007 |
| | | JP 5430854 B2 | 05-03-2014 |
| | | JP 2008532566 A | 21-08-2008 |
| | | US 2006173576 A1 | 03-08-2006 |
| | | US 2010268381 A1 | 21-10-2010 |
| | | WO 2006065515 A2 | 22-06-2006 |
| US 2009306817 A1 | 10-12-2009 | CN 102239485 A | 09-11-2011 |
| | | EP 2304600 A1 | 06-04-2011 |
| | | JP 2011525019 A | 08-09-2011 |
| | | US 2009306817 A1 | 10-12-2009 |
| | | WO 2009152115 A1 | 17-12-2009 |

EPO FORM P0459

For more details about this annex : see Official Journal of the European Patent Office, No. 12/82